# FASCICULE DE BREVET EUROPEEN

(11) **EP 3 258 618 B1**
(45) Date de publication et mention de la délivrance du brevet: **09.01.2019**
(21) Numéro de dépôt: 17175872.5
(22) Date de dépôt: 13.06.2017
(51) Int. Cl.: H04B 7/185

(54) **PROCÉDÉ AMÉLIORÉ DE TRANSMISSION DE DONNÉES PAR SATELLITE À TRÈS HAUT DÉBIT**
VERBESSERTES VERFAHREN ZUR DATENÜBERTRAGUNG ÜBER SATELLIT MIT SEHR HOHEM DATENDURCHSATZ
IMPROVED METHOD FOR SATELLITE DATA TRANSMISSION WITH VERY HIGH THROUGHPUT

(30) Priorité: 16.06.2016 FR 1600959
(43) Date de publication de la demande: 20.12.2017
(73) Titulaire: Thales, 92400 Courbevoie (FR)
(72) Inventeur: ARNAUD, Mathieu, 31100 TOULOUSE (FR); BAUDOIN, Cédric, 31100 TOULOUSE (FR); NIDDAM, David, 31100 TOULOUSE (FR); LAUTIER, Patrick, 31100 TOULOUSE (FR)
(74) Mandataire: Priori, Enrico

(56) Documents cités:
- US-A1- 2007 097 852
- US-A1- 2014 064 280
- US-B1- 6 781 968

## Description

La présente invention concerne un procédé amélioré de transmission de données par satellite. Elle s'applique à tout système de télécommunication par satellite et en particulier à des systèmes de transmission à très haut débit de type HTS ou VHTS (en anglais : Very High Troughput Satellite).

Un système de télécommunication par satellite comporte des liens montants entre des stations terrestres GS (en anglais Gateway Station) et un processeur OBP (en anglais On Board Processor) monté à bord d'un satellite et des liens descendants entre le processeur OBP et des terminaux utilisateurs. Généralement, le lien montant a un bilan de liaison, c'est-à-dire un rapport signal à bruit, bien meilleur que le lien descendant. Le processeur OBP peut être un processeur transparent ou un processeur régénératif.

Dans le cas où le processeur OBP est transparent, la forme d'onde utilisée pour transmettre les données est modulée au sol dans la station terrestre avant d'être transmise vers le satellite. Le processeur à bord du satellite reçoit et retransmet la forme d'onde vers les terminaux utilisateurs sans la traiter. Cependant dans les systèmes de transmission à très haut débit, l'utilisation d'un processeur transparent est souvent inadaptée pour transporter le fort débit nécessaire, en raison d'un manque de ressource fréquentielle. Pour pallier ce problème, la tendance actuelle est d'utiliser des bandes de fréquences plus larges comme les bandes V et Q, mais cela a pour effet de détériorer le bilan de liaison. En effet, plus la fréquence est élevée, plus les phénomènes d'atténuation atmosphérique sont sévères. Cela nécessite d'utiliser des mécanismes de diversité géographique, ce qui conduit à une complexité accrue des équipements utilisés dans la station terrestre et augmente fortement le coût du système de transmission.

Dans le cas où le processeur OBP est régénératif, la station terrestre module les signaux radiofréquences à transporter et les convertit sous une forme numérique avant de les transmettre sur le lien montant, vers le satellite. Le processeur OBP régénératif comporte donc des équipements de démodulation des données numériques reçues, un dispositif de routage, et des équipements de remodulation des données avant de les transmettre sur le lien descendant, vers les terminaux utilisateurs. Les processeurs régénératifs actuels sont très complexes car, en raison de l'empilement des couches de protocole utilisé pour la transmission des données, il est nécessaire de réaliser à bord du satellite, une démodulation complète des données reçues sur le lien montant, une commutation et un routage de tous les paquets IP, puis une re-modulation complète des données à transmettre sur le lien descendant. Les traitements à bord du satellite étant réalisés sur chaque paquet IP, ils sont lourds et complexes et nécessitent une puissance de calcul et une puissance de traitement à bord très importante, ce qui entraîne une consommation électrique et une dissipation thermique d'autant plus importantes que le débit des données à transmettre est élevé. Le problème est que la capacité de traitement et la puissance disponible à bord d'un satellite est limitée et n'est pas adaptée aux très hauts débits.

Le document US2014/064280 divulgue un système de transmission de données par satellite selon l'art antérieur.

Le but de l'invention est de remédier aux inconvénients des procédés de transmission des données connus, de réduire la complexité des traitements réalisés à bord du satellite, de diminuer la puissance de calcul et de traitement nécessaires à bord du satellite, et d'augmenter l'efficacité spectrale sur le lien montant.

Pour cela, l'invention concerne un procédé de transmission des données par satellite dans lequel les données à transmettre sur le lien descendant sont prétraitées et pré-encodées dans la station terrestre et dans lequel l'empilement des couches de protocole émis sur le lien montant est modifié de façon à intégrer d'une part les données prétraitées et pré-encodées en tenant compte du taux de codage et du type de modulation à transmettre par le lien descendant, et d'autre part à signaler à l'OBP à bord du satellite, avec quelle fréquence porteuse, c'est-à-dire avec quel modulateur, doivent être modulées les données prétraitées à transmettre sur le lien descendant, et avec quel taux de codage et quel type de modulation, les informations de taux de codage et du type de modulation étant des informations transmises par la station terrestre.

Selon l'invention, le procédé de transmission de données par satellite entre une station terrestre et des terminaux utilisateurs, les données étant transmises vers le satellite par la station terrestre sur un lien montant UL sous la forme d'une succession de trames et retransmises par le satellite sur un lien descendant DL vers les terminaux utilisateurs, la retransmission des données sur le lien descendant DL étant réalisée après modulation avec une fréquence porteuse dédiée au lien descendant DL correspondant, le procédé consistant, dans la station terrestre, à segmenter, assembler et encapsuler les données en différentes trames de base successives UL BB-Frames, aptes à être émises sur le lien montant, chaque trame de base UL BB-Frame comportant un champ d'en-tête UL BBHeader, dédié au lien montant UL et un champ de données UL DATAFIELD à envoyer sur le lien montant UL, puis à coder et à moduler les données de chaque trame de base UL BB-Frame pour constituer des trames UL PL-Frames et à envoyer les UL PL-Frames sur le lien montant UL, caractérisé en ce que le procédé comporte en outre :
- une première étape additionnelle de pré-traitement consistant, dans la station terrestre, à pré-segmenter les données en fonction de la fréquence porteuse qui leur est dédiée sur le lien descendant DL, à rassembler et à encapsuler les données pré-segmentées dans des trames de base successives DL BB-Frames, aptes à être émises sur le lien descendant, l'encapsulation de chaque trame de base DL BB-Frame du lien descendant consistant à ajouter une en-tête de transport DL BB-TH dédiée au lien descendant,
- et une deuxième étape additionnelle consistant, dans la station terrestre, à intégrer les différentes trames de base DL BB-Frames du lien descendant, associées à leurs en-têtes de transport DL BB-TH respectives, dans le champ de données des différentes trames de base UL BB-Frames du lien montant.

Avantageusement, l'en-tête de transport DL BB-TH de chaque trame DL BB-Frame du lien descendant comporte des instructions à destination d'un processeur OBP monté à bord du satellite, les instructions comportant au moins un paramètre d'identification DL Id d'un modulateur codeur à utiliser sur le lien descendant, un identifiant de la fréquence porteuse à utiliser, un paramètre de début et un paramètre de fin indiquant le début et la fin de la trame DL BB-Frame correspondante, et un paramètre de longueur de la trame DL BB-Frame correspondante.

Avantageusement, lorsqu'une trame DL BB-Frame a une longueur supérieure à la longueur du champ de données disponible dans la UL BB-Frame du lien montant, la première étape additionnelle de pré-traitement consiste en outre à fragmenter la trame DL BB-frame correspondante en plusieurs fragments, puis à encapsuler chaque fragment avec une en-tête de transport DL BB-TH correspondante, et, la deuxième étape additionnelle, consiste à intégrer les différents fragments de la trame DL BB-Frame fragmentée dans différentes trames UL BB-Frames consécutives, du lien montant.

Avantageusement, le procédé consiste en outre, à bord du satellite, à recevoir les UL PL-Frames, à démoduler et décoder les données des trames UL PL-Frames reçues pour en extraire les UL BB-Frames puis, à partir de chaque UL BB-Frame, à extraire les fragments de DL BB-Frames et à réassembler les fragments pour reconstituer les DL BB-Frames complètes, à router chaque DL BB-Frame vers le modulateur/codeur correspondant à l'identifiant DL Id indiqué dans l'en-tête de transport DL BB-TH de ladite DL BB-Frame, puis à transmettre les trames modulées et codées sur le lien descendant DL.

D'autres particularités et avantages de l'invention apparaîtront clairement dans la suite de la description donnée à titre d'exemple purement illustratif et non limitatif, en référence aux dessins schématiques annexés qui représentent :
- figure 1 : un exemple d'empilement des couches de protocole conforme à la norme DVB-S2, émis par une station terrestre, reçu et émis par un émetteur/récepteur à bord d'un satellite et reçu par un terminal utilisateur, selon l'art antérieur ;
- figure 2 : un schéma synoptique d'un exemple de procédé de transmission des données par satellite, le procédé étant dit « complètement régénératif », selon l'art antérieur ;
- figure 3 : un exemple d'empilement des couches de protocole conforme à la norme DVB-S2, émis par une station terrestre, reçu et émis par un émetteur/récepteur à bord d'un satellite et reçu par un terminal utilisateur, selon l'invention ;
- figure 4: un schéma synoptique d'un exemple de procédé amélioré de transmission des données par satellite, selon l'invention;
- figure 5 : un schéma synoptique des équipements de transmission des données montés à bord du satellite, selon l'invention ;
- figure 6 : un premier exemple illustrant la construction de deux trames UL BB-Frames successives dans la station terrestre et l'extraction puis le réassemblage des DL BB-Frames à bord du satellite, selon l'invention ;
- figure 7 : un deuxième exemple de plusieurs trames UL BB-Frames successives, selon l'invention.

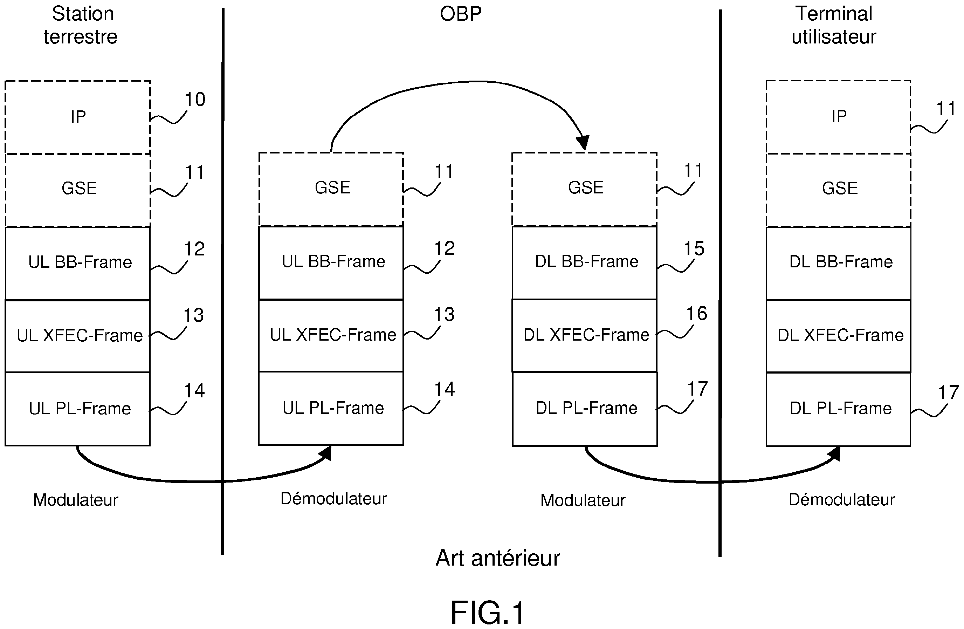

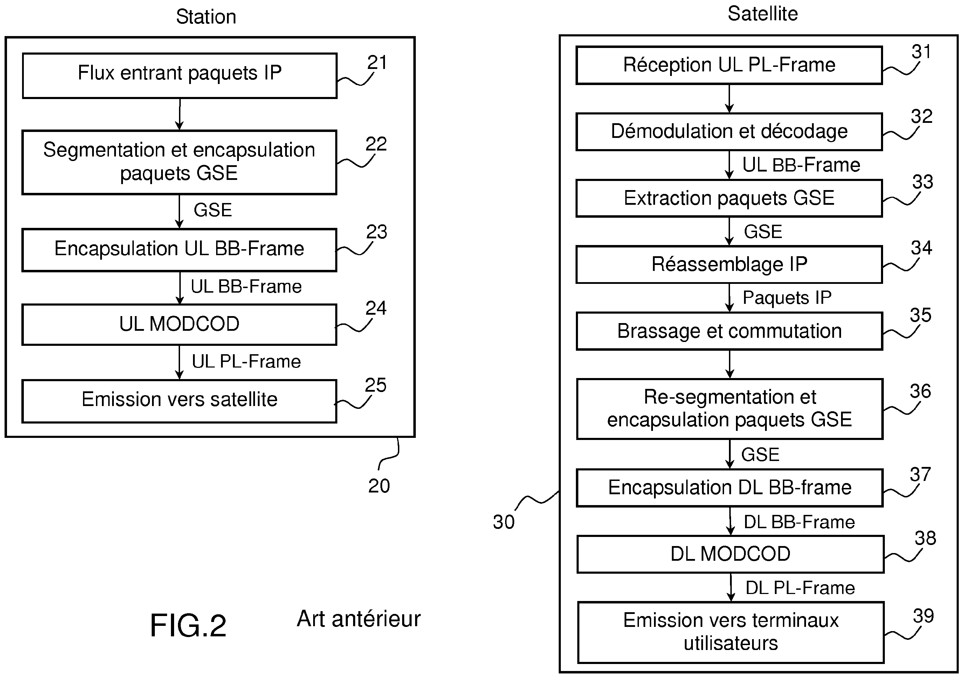

La figure 1 illustre un exemple d'empilement des couches de protocole, émis par une station terrestre (Gateway), reçu et émis par un récepteur/émetteur à bord d'un satellite et reçu par un terminal utilisateur, selon l'art antérieur. Dans cet exemple, l'empilement des couches protocolaires utilise la norme DVB-S2 (Digital Video Broadcasting-Second Génération). Le schéma comporte quatre colonnes différentes. La colonne de gauche montre l'empilement des couches protocolaires successives transmises par une station terrestre, les deux colonnes centrales représentent l'empilement des couches protocolaires successives reçues par le récepteur/émetteur à bord du satellite et respectivement l'empilement des couches protocolaires successives retransmises vers les utilisateurs après traitement à bord du satellite, la colonne de droite illustre l'empilement des couches protocolaires successives reçu par les utilisateurs. La figure 2 illustre un schéma synoptique d'un exemple de procédé de transmission de données par satellite, le procédé étant dit « complètement régénératif », selon l'art antérieur. Dans la station terrestre 20, le flux entrant 21 des données est constitué de paquets IP 10. Les paquets IP 10 représentés en haut de l'empilement des couches protocolaires, sont segmentés et encapsulés 22 par ajout d'une première en-tête (Header) pour former des paquets GSE 11 (Generic Stream Encapsulation), puis chaque paquet GSE 11 est encapsulé 23 à nouveau par ajout d'une deuxième en-tête pour former une trame de base appelée UL BB-Frame 12 (Up Link-Base Band Frame). Ensuite, la UL BB-Frame 12 est encodée et modulée 24 par un modulateur codeur UL MODCOD destiné à introduire un code correcteur d'erreur pour obtenir la UL XFEC-Frame 13 (Forward Error Correction Frame), puis à moduler la UL XFEC-Frame par une fréquence porteuse pour obtenir la UL PL-Frame 14 (Physical Layer Frame) qui est transmise 25 au satellite 30, par la station terrestre 20, sur le lien montant. Dans le satellite 30, la UL PL-Frame 14 est reçue 31 par un récepteur comportant un démodulateur qui la démodule et la décode 32 complètement pour récupérer la UL BB-Frame 12 qui est ensuite transmise au processeur de bord OBP où elle traitée pour en extraire 33 les paquets GSE 11. Dans l'OBP, tous les paquets GSE 11 doivent alors être réassemblés 34 pour extraire les paquets IP auxquels sont alors appliqués des traitements 35 comportant des opérations de brassage et de commutation. Après traitement dans l'OBP, les paquets IP sont re-segmentés et encapsulés 36 par ajout d'une première en-tête pour reformer des paquets GSE, puis chaque paquet GSE est encapsulé 37 à nouveau par ajout d'une deuxième en-tête pour former une trame de base appelée DL BB-Frame 15 (Down Link-Base Band Frame). La DL BB-Frame 15 est ensuite ré-encodée pour former une DL XFEC-Frame 16, puis re-modulée 38 dans un modulateur codeur DL MODCOD pour obtenir une DL PL-Frame 17 apte à être émise 39 par un émetteur, vers des terminaux utilisateurs, sur un lien descendant. Les terminaux utilisateurs reçoivent la DL PL-Frame 17 qu'ils décodent et démodulent pour en extraire les paquets IP 10.

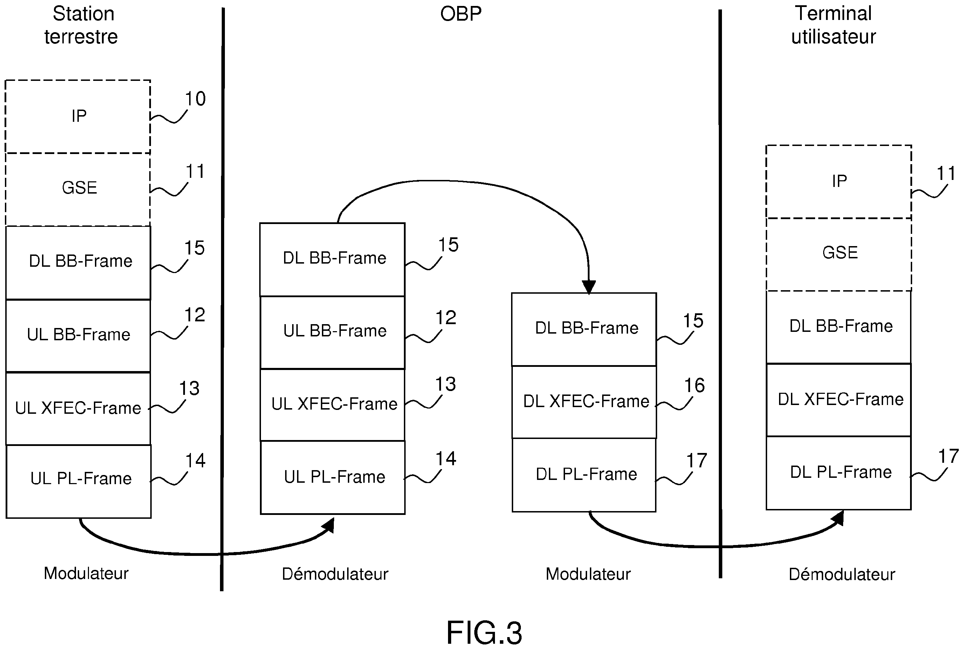

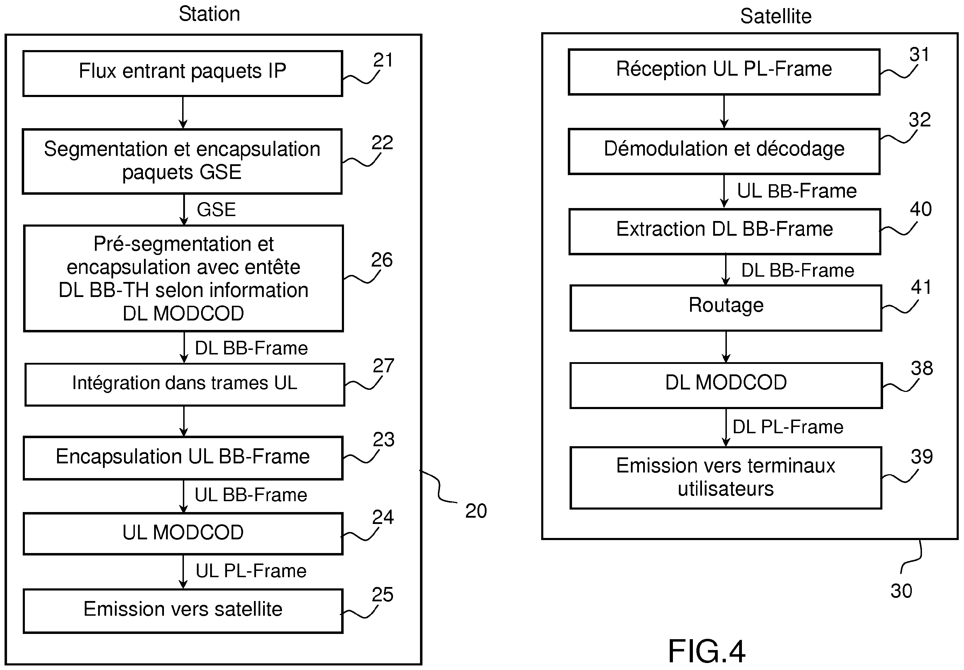

La figure 3 illustre un exemple d'empilement des couches de protocole, émis par une station terrestre, reçu et émis par un récepteur/émetteur à bord d'un satellite et reçu par un terminal utilisateur, selon l'invention. Dans cet exemple, l'empilement des couches protocolaires utilise la norme DVB-S2. La figure 4 illustre un schéma synoptique d'un exemple de procédé amélioré de transmission de données par satellite, selon l'invention. Dans la station terrestre 20, le flux entrant 21 des données est constitué de paquets IP 10. Les paquets IP 10 sont segmentés et encapsulés 22 par ajout d'une première en-tête pour former des paquets GSE 11. Puis, au lieu de transmettre, sur le lien montant, des paquets GSE dans la UL BB-Frame, pour minimiser les traitements à réaliser à bord du satellite, selon l'invention, les paquets GSE 11 sont prétraités 26 dans la station terrestre, de façon à les mettre sous la forme de trames DL BB-Frames 15 aptes à être émises sur le lien descendant. La taille des données par DL-BB-Frame dépend du taux de codage et du type de modulation du lien descendant. En outre, l'empilement des couches de protocole émis sur le lien montant est modifié de façon d'une part, à intégrer, dans les UL BB-Frames, les DL BB-Frames à transmettre sur le lien descendant, et d'autre part, à intégrer en outre, dans les UL BB-Frames, une en-tête additionnelle de transport DL BB-TH (Base Band-Transport Header) associée à chaque DL BB-Frame pour notamment indiquer à l'OBP avec quelle fréquence porteuse, c'est-à-dire avec quel modulateur, doivent être modulées les DL BB-Frames à transmettre sur le lien descendant et pour indiquer le taux de codage et le type de modulation requis. Ainsi, comme le montre la figure 4, dans la station terrestre 20, le procédé amélioré de transmission des données comporte une première étape et une deuxième étape additionnelles. La première étape additionnelle 26 est une étape de pré-traitement, réalisée sur les paquets GSE 11, consistant, dans l'ordre, à rassembler les paquets GSE, puis à pré-segmenter et à encapsuler les données pour former des DL BB-Frames 15. L'encapsulation des données de chaque DL BB-Frame consiste à ajouter, devant le champ des données de chaque DL BB-Frame, une en-tête spécifique de transport, appelée DL BB-TH (BB-Transport Header). La pré-segmentation en DL BB-Frame est réalisée en fonction de la fréquence porteuse à utiliser pour le transport des données correspondantes sur le lien descendant. La deuxième étape additionnelle 27 consiste à intégrer les DL BB-Frames successives, associées à leur en-tête de transport DL BB-TH respective, dans le champ des données des trames successives du lien montant UL. Les données de chaque trame du lien montant UL sont ensuite encapsulées 23 dans une UL BB-Frame par ajout d'une deuxième en-tête UL BBHeader contenant des informations sur le codage et la modulation de la UL BB-Frame 12. Puis la UL BB-Frame 12 est codée pour former une UL XFEC-Frame 13 et modulée pour former une UL PL-Frame 14.

Conformément à l'invention, l'en-tête de transport DL BB-TH, dédiée au transport de chaque DL BB-Frame 15 sur le lien descendant DL, comporte d'une part, des informations concernant les opérations réalisées par la station au sol et relatives à la segmentation et à l'encapsulation de la DL BB-Frame 15 dans les UL BB-Frames et d'autre part, des informations relatives au réassemblage et à l'extraction de la DL BB-Frame 15, à l'envoi de la DL BB-Frame vers un modulateur codeur prédéterminé et à la construction des DL PL-Frames 17. Ainsi, l'en-tête de transport DL BB-TH de chaque DL BB-Frame comporte notamment, un paramètre concernant le port de sortie de l'OBP vers lequel doit être envoyée chaque DL BB-Frame, un paramètre concernant le modulateur DL MODCOD à utiliser pour coder et moduler la DL BB-Frame pour construire la DL PL-Frame 17 avant de la transmettre sur le lien descendant, un identifiant DL-Id relatif à la fréquence porteuse à utiliser, des informations concernant la longueur DL-FL de chaque DL BB-Frame et des informations concernant le début et la fin des différentes DL BB-Frames 15 intégrées dans la UL BB-Frame 12 et permettant le réassemblage des DL BB-Frames dans le processeur OBP à bord du satellite. Ces informations permettent notamment, d'indiquer à l'OBP à bord du satellite, vers quel modulateur codeur, ou vers quel ensemble de modulateurs codeurs, il doit router les DL BB-Frames.

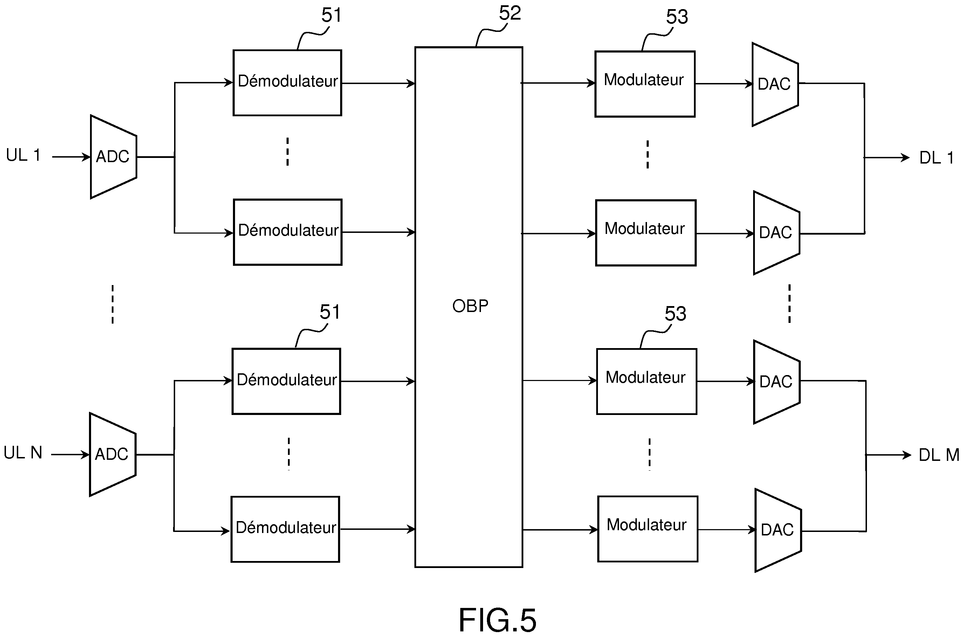

A bord du satellite, comme représenté sur la figure 4 et sur le schéma synoptique de la figure 5, les équipements de transmission des données montés à bord du satellite comportent un récepteur comportant N entrées aptes à recevoir 31 des UL PL-Frames 14 provenant de N liens montants UL1,..., ULN, chaque entrée étant connectée à une pluralité de démodulateurs 51 aptes à démoduler et décoder 32 les UL PL-Frames 14 reçues, un processeur OBP 52 apte à extraire 40 et à router 41 les DL BB-Frames, une pluralité de modulateurs codeurs DL MODCOD 53 aptes à coder et moduler 38 les DL BB-Frames routées par l'OBP 52 pour construire les DL PL-Frames à émettre 39 sur un lien descendant, chaque modulateur 53 étant connecté à une sortie de l'OBP, et un émetteur comportant M liens descendants DL1,..., DLM connectés en sortie des modulateurs codeurs 53, M et N étant des nombres entiers supérieurs à 1. Les démodulateurs 51 décodent les UL PL-Frames reçues sur les liens montants pour en extraire les UL XFEC-Frames et démodulent les UL XFEC-Frames pour en extraire 32 les UL BB-frames, puis en extraire 40 les DL BB-Frames. Les DL BB-Frames issues de chaque démodulateur 51 sont transmises à l'OBP 52 qui, en fonction de l'identifiant DL-Id du modulateur codeur 53 du lien descendant introduit par la station terrestre, dans l'en-tête de transport DL BB-TH de chaque DL BB-Frame, route 41 chaque DL BB-Frame vers le modulateur codeur correspondant au DL-Id indiqué. Le modulateur 53 encode et module 38 les données de la DL BB-Frame pour former une DL XFEC-Frame puis une DL PL-Frame. La DL PL-Frame est ensuite transmise 39 par l'émetteur, sur le lien descendant DL1,...,DLM auquel est raccordé la sortie du modulateur 53, vers les terminaux utilisateurs. A la réception, les terminaux utilisateurs démodulent complètement les DL PL-Frames reçues pour récupérer les paquets IP.

Ainsi, avec le procédé amélioré selon l'invention, l'OBP 52 reçoit directement les DL BB-Frames qu'il doit émettre vers les terminaux utilisateurs. En outre, dans l'en-tête de transport DL BB-TH associée à chaque DL BB-Frame, l'OBP 52 reçoit toutes les instructions nécessaires pour l'extraction, le réassemblage, la modulation et le codage de chaque DL BB-Frame à transmettre sur le lien descendant. Il n'est plus nécessaire de réaliser une démodulation complète des données à bord du satellite, ni de traiter et de re-fragmenter des paquets IP dans l'OBP 52 pour construire les DL BB-Frames, ce qui permet de réduire considérablement la puissance de calcul et de traitement nécessaire à bord du satellite. Les opérations réalisées à bord du satellite sont uniquement une démodulation partielle des données de chaque PL BB-Frame jusqu'au niveau de la DL BB-Frame, puis un routage des DL BB-Frames par l'OBP 52, vers un modulateur codeur DL MODCOD 53 ayant un identifiant DL-Id prédéterminé et indiqué dans l'en-tête de transport DL BB-TH de chaque DL BB-Frame. L'OBP 52 à bord du satellite 30 est donc un processeur de connectivité car sa fonction est uniquement d'assurer les connexions, entre les liens montants et les liens descendants, ordonnées par la station terrestre 20.

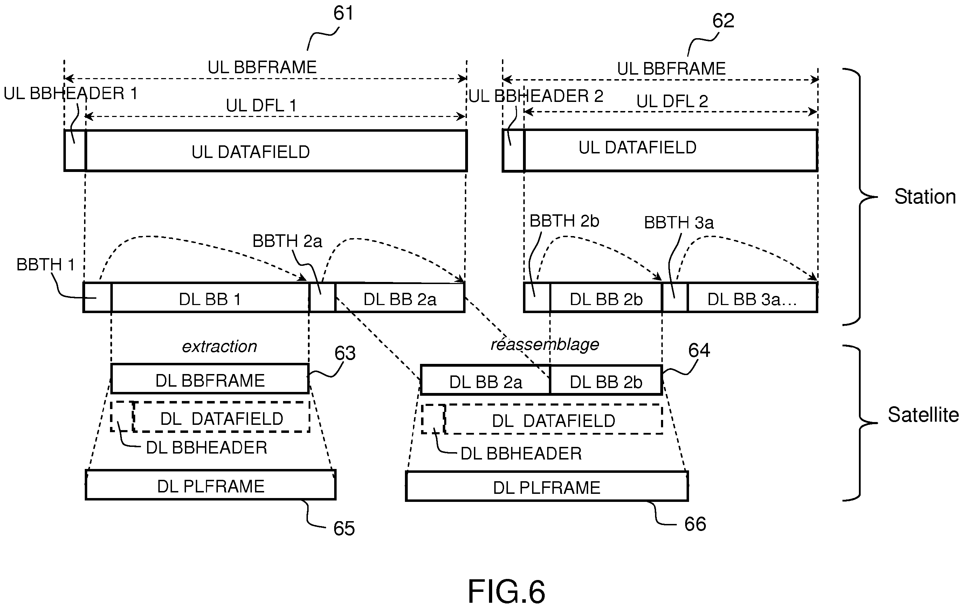

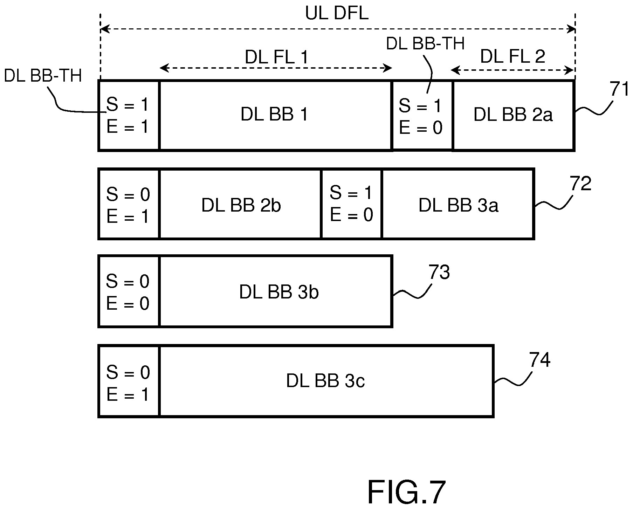

Comme représenté sur les exemples des figures 6 et 7, une trame UL BB-frame est constituée d'une en-tête UL BBHeader suivi d'un champ de données UL DATAFIELD (Up Link Data Field) dédiés aux données à transmettre sur le lien montant UL1,...,ULN. Conformément à l'invention, le champ de données à transmettre sur le lien montant est constitué de séquences de DL BB-frames à transmettre sur le lien descendant, chaque séquence de DL BB-Frame étant associée à une en-tête de transport DL BB-TH placée avant les données. La longueur UL DFL du champ des données d'une UL BB-Frame est variable mais est prédéfinie dans la station terrestre 20, pour chaque UL BB-Frame, et indiquée dans l'en-tête UL BBHeader correspondante. La longueur totale du champ disponible pour les DL BB-Frames, incluant les données associées à leur en-tête de transport DL BB-TH respective, est exactement égale à cette longueur UL DFL du champ des données de la UL BB-Frame correspondante. Par conséquent, il est souvent nécessaire de scinder des trames DL BB-Frames en plusieurs fragments différents et d'intégrer les différents fragments dans différentes UL BB-Frames consécutives. Chaque UL BB-Frame comporte donc une ou plusieurs séquences de DL BB-frames, les séquences pouvant être des DL BB-Frames complètes et/ou des fragments de DL BB-frames incomplètes. Dans le champ des données de chaque UL BB-Frame, chaque séquence et chaque fragment de DL BB-Frame est associé à une en-tête de transport DL BB-TH spécifique placée devant les données de la séquence ou du fragment de DL BB-Frame correspondant. Lorsqu'une trame DL BB-Frame 64 a une longueur supérieure à la longueur du champ de données disponible dans la UL BB-Frame 61 du lien montant, la première étape additionnelle 26 de pré-traitement consiste donc en outre, après la pré-segmentation des paquets GSE en DL BB-Frames, à fragmenter la trame DL BB-frame 64 correspondante en plusieurs fragments de DL BB-Frame, DL BB2a, DL BB 2b, puis à encapsuler chaque fragment avec une en-tête de transport DL BB-TH correspondante BBTH2a, BBTH2b. La deuxième étape additionnelle 27, d'intégration dans les trames du lien montant UL consiste alors à intégrer les différents fragments de la trame DL BB-Frame 64 fragmentée dans différentes trames UL BB-Frames 61, 62 consécutives, du lien montant.

Ainsi, par exemple, sur la figure 6, sont représentés, d'une part, la construction, dans la station terrestre de deux trames UL BB-Frames 61, 62 consécutives et d'autre part, l'extraction et le ré-assemblage, à bord du satellite, des DL BB-Frames 63, 64 intégrées dans les UL BB-Frames, par la station terrestre. Dans la station terrestre 20, chaque UL BB-Frame 61, 62 est construite et comporte un champ d'en-tête UL BBHeader et un champ des données UL DATAFIELD. Le champ des données de chaque UL BB-Frame peut être constitué d'une ou de plusieurs séquences de DL BB-Frames, selon la longueur disponible dans le champ des données correspondant qui peut varier d'une trame UL BB-Frame à une autre trame UL BB-Frame. Sur l'exemple de la figure 6 la première UL BB-Frame 61, a une longueur UL DFL1 et est constituée de deux séquences consécutives de DL BB-frames, DL BB1 et DL BB2a respectivement associées leur en-tête de transport respective BBTH1, BBTH2a. La première séquence DL BB 1 est une trame DL BB-Frame 63 complète associée à une en-tête de transport BBTH1 et la deuxième séquence est un fragment DL BB2a associé à une en-tête de transport BBTH2a, et correspond au début d'une deuxième trame DL BB-Frame 64 incomplète. Le champ des données de la deuxième UL BB-Frame 62 a une longueur UL DFL2 et est également constituée de deux séquences consécutives de DL BB-Frames. La première séquence de la deuxième UL BB-Frame 62 est constituée d'un premier fragment DL BB2b associé à une en-tête de transport BBTH2b, et correspond à la fin de la deuxième DL BB-Frame 64. La deuxième séquence de la deuxième UL BB-Frame 62 est constituée d'un fragment DL BB3a associé à une en-tête de transport BBTH3a, et correspond au début d'une troisième DL BB-frame incomplète. Les en-têtes de transport placées avant chaque séquence de DL BB-Frame comportent une information indiquant s'il s'agit du début de la trame ou pas, une information indiquant si la séquence inclut la fin de la trame ou non et une information sur la longueur de chaque séquence. Ces informations de début, de fin et de longueur de chaque DL BB-Frame 63, 64 permettent au processeur OBP 52 à bord du satellite, d'extraire, dans chaque trame UL BB-frame reçue, chaque séquence de DL BB-Frame DLBB1, DLBB2a, DLBB2b, ... et de réassembler les trames incomplètes pour reconstituer des trames complètes DL BB-Frame 63, DL BB-Frame 64,... auxquelles sont ajoutées des en-têtes DL BBHeader avant de les transmettre à un modulateur codeur 53 prédéterminé pour respectivement obtenir les DL PL-Frame 65 et DL PL-Frame 66 à émettre vers les terminaux utilisateurs. Le modulateur codeur DL MODCOD 53 prédéterminé correspond à l'identifiant DL-Id indiqué dans l'en-tête de transport DL BB-TH de chaque DL BB-Frame.

Le gain d'efficacité entre le lien montant UL et le lien descendant DL est alors directement lié au rapport du nombre de DL BB-Frames qui sont encapsulées dans une UL BB-Frame selon les taux de codage et le type des modulations UL et DL requis à chaque instant, les taux de codage et le type des modulations UL et DL pouvant varier à chaque BB-Frame UL ou DL. La complexité des traitements est alors partagée entre les équipements à bord du satellite et les équipements situés dans la station terrestre. A bord du satellite, la complexité est grandement réduite par rapport aux traitements réalisés dans les systèmes de transmission actuels, et se limite à un simple traitement de réassemblage de DL BB-Frame de taille connue, sans qu'il soit nécessaire d'accéder aux paquets IP, tout en assurant la commutation des DL BB-Frames et la réplication du trafic sur les ports d'émission du lien descendant DL. La capacité de mémoire nécessaire à bord du satellite est donc très réduite. Dans la station terrestre, la puissance de calcul requise tient compte des évolutions de performances technologiques souhaitées et doit être bien supérieure à celle embarquée à bord du satellite. En effet, la puissance de calcul dans la station terrestre doit permettre d'assurer le traitement du trafic à transmettre sur le lien descendant, y compris en cas d'évolution du trafic, sans qu'il soit nécessaire de modifier les terminaux utilisateurs.

La figure 7 est un exemple montrant différentes trames UL BB-Frames 71, 72, 73, 74 consécutives dans lesquelles sont intégrées une ou plusieurs séquences de DL BB-Frames, l'en-tête de transport DL BB-TH de chaque séquence de DL BB-Frame étant munie des informations de début S (Start) et de fin E (End) de la trame DL BB-Frame correspondante. A titre d'exemple non limitatif, un bit de valeur 1 correspond à oui et un bit de valeur 0 correspond à non. La première trame UL BB-Frame 71 est constituée de deux séquences consécutives DL BB1 et DL BB2a. L'en-tête de transport DL BB-TH associée à la séquence DL BB1 comporte les informations S=1 et E=1, ce qui signifie que cette séquence commence et se termine dans ladite première trame UL BB-Frame 71 et qu'elle est donc complète. La longueur DL FL1 de cette séquence est également indiquée dans l'en-tête de transport correspondante. L'en-tête de transport DL BB-TH associée à la séquence DL BB2a comporte les informations S=1 et E=0, ce qui signifie que cette séquence comporte le début mais pas la fin de la deuxième trame DL BB-Frame et que la deuxième trame DL BB-Frame est donc incomplète. La longueur DL FL de cette séquence DL BB2 est également indiquée dans l'en-tête de transport correspondante. La deuxième trame UL BB-Frame 72 est constitué de deux séquences consécutives DL BB2b et DL BB3a. L'en-tête de transport associée à la séquence DL BB2b comporte les informations S=0 et E=1, ce qui signifie que cette séquence ne comporte pas le début de la deuxième trame DL BB Frame mais qu'elle comporte la fin de ladite deuxième trame DL BB-Frame et que la deuxième trame DL BB-Frame est donc incomplète. Concernant la troisième trame DL BB-Frame, elle a été scindée en trois fragments différents DL BB3a, DL BB3b, DL BB3c respectivement intégrés dans trois trames UL BB-Frames successives différentes, c'est-à-dire dans la deuxième, la troisième et la quatrième UL BB-Frame 72, 73, 74. L'en-tête de transport DL BB-TH du premier fragment intégré dans la deuxième trame UL BB-Frame 72, comporte les informations S=1 et E=0 qui indiquent que ce premier fragment DL BB3a est le début d'une DL BB-Frame incomplète. L'en-tête de transport DL BB-TH du deuxième fragment DL BB3b intégré dans la troisième trame UL BB-Frame 73, comporte les informations S=0 et E=0 qui indiquent que ce deuxième fragment ne comporte ni le début, ni la fin d'une DL BB-Frame et correspond donc à un fragment intermédiaire. L'en-tête de transport DL BB-TH du troisième fragment DL BB3c intégré dans la quatrième trame UL BB-Frame 74, comporte les informations S=0 et E=1 qui indiquent que ce troisième fragment ne comporte pas le début d'une DL BB-Frame mais qu'il en comporte la fin et que c'est le dernier fragment.

Bien que l'invention ait été décrite en liaison avec des modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Procédé de transmission de données par satellite entre une station terrestre (20) et des terminaux utilisateurs, les données étant transmises vers le satellite (30) par la station terrestre (20) sur un lien montant UL sous la forme d'une succession de trames et retransmises par le satellite (30) sur un lien descendant DL vers les terminaux utilisateurs, la retransmission des données sur le lien descendant DL étant réalisée après modulation avec une fréquence porteuse dédiée au lien descendant DL correspondant, le procédé consistant, dans la station terrestre (20), à segmenter, assembler et encapsuler les données en différentes trames de base successives UL BB-Frames (12, 61, 62, 71, 72, 73, 74), aptes à être émises sur le lien montant, chaque trame de base UL BB-Frame comportant un champ d'en-tête UL BBHeader, dédié au lien montant UL et un champ de données UL DATAFIELD à envoyer sur le lien montant UL, puis à coder et à moduler les données de chaque trame de base UL BB-Frame pour constituer des trames UL PL-Frames (14) et à envoyer les UL PL-Frames (14) sur le lien montant UL, **caractérisé en ce que** le procédé comporte en outre :
- une première étape additionnelle de pré-traitement (26) consistant, dans la station terrestre (20), à pré-segmenter les données en fonction de la fréquence porteuse qui leur est dédiée sur le lien descendant DL et à encapsuler les données pré-segmentées dans des trames de base successives DL BB-Frames (15, 63, 64), aptes à être émises sur le lien descendant, l'encapsulation de chaque trame de base DL BB-Frame (15, 63, 64) du lien descendant consistant à ajouter une en-tête de transport DL BB-TH dédiée au lien descendant,
- et une deuxième étape additionnelle (27) consistant, dans la station terrestre (20), à intégrer les différentes trames de base DL BB-Frames (15, 63, 64) du lien descendant, associées à leurs en-têtes de transport DL BB-TH respectives, dans le champ de données des différentes trames de base UL BB-Frames (12, 61, 62, 71, 72, 73, 74) du lien montant.

2. Procédé de transmission selon la revendication 1, **caractérisé en ce que** l'en-tête de transport DL BB-TH de chaque trame DL BB-Frame (15, 63, 64) du lien descendant comporte des instructions à destination d'un processeur OBP (52) monté à bord du satellite (30), les instructions comportant au moins un paramètre d'identification DL Id d'un modulateur codeur (53) à utiliser sur le lien descendant, un identifiant de la fréquence porteuse à utiliser, un paramètre de début et un paramètre de fin indiquant le début et la fin de la trame DL BB-Frame (15, 63, 64) correspondante, et un paramètre de longueur de la trame DL BB-Frame (15, 63, 64) correspondante.

3. Procédé de transmission selon la revendication 2, **caractérisé en ce que** lorsqu'une trame DL BB-Frame (15, 63, 64) a une longueur supérieure à la longueur du champ de données disponible dans la UL BB-Frame (12, 61, 62, 71, 72, 73, 74) du lien montant, la première étape additionnelle (26) de pré-traitement consiste en outre à fragmenter la trame DL BB-frame (15, 63, 64) correspondante en plusieurs fragments (DL BB2a, DL BB2b), puis à encapsuler chaque fragment avec une en-tête de transport DL BB-TH correspondante, et, la deuxième étape additionnelle (27), consiste à intégrer les différents fragments de la trame DL BB-Frame (15, 63, 64) fragmentée dans différentes trames UL BB-Frames (61, 62, 71, 72, 73, 74) consécutives, du lien montant.

4. Procédé de transmission selon la revendication 3, **caractérisé en ce qu'**il consiste en outre, à bord du satellite (30), à recevoir (31) les UL PL-Frames (14), à démoduler et décoder (32) les données des trames UL PL-Frames reçues pour en extraire les UL BB-Frames puis, à partir de chaque UL BB-Frame, à extraire les fragments de DL BB-Frames (15, 63, 64) et à réassembler les fragments pour reconstituer les DL BB-Frames complètes, à router chaque DL BB-Frame vers le modulateur/codeur correspondant à l'identifiant DL Id indiqué dans l'en-tête spécifique DL BB-TH de ladite DL BB-Frame, puis à transmettre les trames modulées et codées sur le lien descendant DL.

## Patentansprüche

1. Verfahren zur Datenübertragung über Satelliten zwischen einer Bodenstation (20) und Benutzerterminals, wobei die Daten an den Satelliten (30) durch die Bodenstation (20) auf einem Uplink UL in Form einer Abfolge von Rahmen übertragen und vom Satelliten (30) auf einem Downlink DL an die Benutzerterminals weiterübertragen werden, wobei die Datenweiterübertragung auf dem Downlink DL nach Modulierung mit einer dem entsprechenden Downlink DL zugewiesenen Trägerfrequenz erfolgt, wobei das Verfahren darin besteht, in der Bodenstation (20) die Daten in unterschiedliche, aufeinander folgende Basis-Rahmen UL BB-Frames (12, 61, 62, 71, 72, 73, 74) zu segmentieren, zusammenzustellen und zu verkapseln, welche in der Lage sind, auf dem Uplink gesendet zu werden, wobei jeder Basis-Rahmen UL BB-Frame ein Headerfeld UL BBHeader beinhaltet, welches dem Uplink UL zugewiesen ist, und ein Datenfeld UL DATAFIELD, welches auf dem Uplink UL zu senden ist, die Daten eines jeden Basisrahmens UL BB-Frame anschließend zu codieren und zu modulieren, um Rahmen UL PL-Frames (14) zu bilden, und die Rahmen UL PL-Frames (14) auf dem Uplink UL zu senden, **dadurch gekennzeichnet, dass** das Verfahren zudem Folgendes beinhaltet:
- einen ersten zusätzlichen Schritt der Vorbehandlung (26), welcher darin besteht, dass die Daten in der Bodenstation (20) angesichts der ihnen zugewiesenen Trägerfrequenz auf dem Downlink DL vorsegmentiert und die vorsegmentierten Daten in den aufeinanderfolgenden Basis-Rahmen DL BB-Frames (15, 63, 64) verkapselt werden, welche in der Lage sind, auf dem Downlink gesendet zu werden, wobei die Verkapselung eines jeden Basis-Rahmens DL BB-Frame (15, 63, 64) des Downlinks darin besteht, einen dem Downlink zugewiesenen Transport-Header DL BB-TH hinzuzufügen,
- und einen zweiten zusätzlichen Schritt (27), welcher darin besteht, dass in der Bodenstation (20) die unterschiedlichen Basis-Rahmen DL BB-Frames (15, 63, 64) des Downlinks, welche mit ihren jeweiligen Transport-Headern DL BB-TH assoziiert sind, in das Datenfeld der unterschiedlichen Basis-Rahmen UL BB-Frames (12, 61, 62, 71, 72, 73, 74) des Uplinks integriert werden.

2. Übertragungsverfahren nach Anspruch 1, **dadurch gekennzeichnet, dass** der Transport-Header DL BB-TH eines jeden Rahmens DL BB-Frame (15, 63, 64) des Downlinks Anweisungen für einen Prozessor OBP (52) beinhaltet, welcher an Bord des Satelliten (30) montiert ist, wobei die Anweisungen mindestens ein Identifizierungsparameter DL Id eines Modulators/Codierers (53), welcher auf dem Downlink zu benutzen ist, eine Kennung der zu benutzenden Trägerfrequenz, ein Anfangsparameter und ein Endparameter, welche den Anfang und das Ende des entsprechenden Rahmens DL BB-Frame (15, 63, 64) angeben und ein Längenparameter des entsprechenden Rahmens DL BB-Frame (15, 63, 64), beinhaltet.

3. Übertragungsverfahren nach Anspruch 2, **dadurch gekennzeichnet, dass**, wenn ein Rahmen DL BB-Frame (15, 63, 64) eine Länge besitzt, welche die Länge des verfügbaren Datenfeldes im Rahmen UL BB-Frame (12, 61, 62, 71, 72, 73, 74) des Uplinks überschreitet, der erste zusätzliche Schritt (26) der Vorbearbeitung zudem darin besteht, den entsprechenden Rahmen DL BB-frame (15, 63, 64) in mehrere Fragmente (DL BB2a, DL BB2b) zu fragmentieren, und anschließend jedes Fragment mit einem entsprechenden Transport-Header DL BB-TH zu verkapseln, und der zweite zusätzliche Schritt (27) darin besteht, die unterschiedlichen Fragmente des fragmentierten Rahmens DL BB-Frame (15, 63, 64) in unterschiedliche aufeinanderfolgende Rahmen UL BB-Frames (61, 62, 71, 72, 73, 74) des Uplinks zu integrieren.

4. Übertragungsverfahren nach Anspruch 3, **dadurch gekennzeichnet, dass** es zudem darin besteht, an Bord des Satelliten (30) die Rahmen UL PL-Frames (14) zu empfangen (31), die Daten der empfangenen Rahmen UL PL-Frames zu demodulieren und zu decodieren (32) um hieraus die Rahmen UL BB-Frames zu extrahieren, und anschließend anhand eines jeden Rahmens UL BB-Frame die Fragmente der Rahmen DL BB-Frames (15, 63, 64) zu extrahieren und die Fragmente wieder zusammenzustellen, um die vollständigen Rahmen DL BB-Frames wiederherzustellen, jeden Rahmen DL BB-Frame an den Modulator/Codierer zu routen, welcher der Kennung DL Id entspricht, welche im spezifischen Header DL BB-TH des Rahmens DL BB-Frame angegeben ist, und anschließend die modulierten und codierten Rahmen auf dem Downlink DL zu übertragen.

## Claims

1. Method for transmitting data by satellite between a gateway station (20) and user terminals, the data being transmitted to the satellite (30) by the gateway station (20) over an uplink UL in the form of a succession of frames and retransmitted by the satellite (30) over a downlink DL to the user terminals, the retransmission of the data over the downlink DL being performed after modulation with a carrier frequency dedicated to the corresponding downlink DL, the method consisting, in the gateway station (20), in segmenting, assembling and encapsulating the data in different successive basic frames UL BB-Frames (12, 61, 62, 71, 72, 73, 74), that can be transmitted over the uplink, each basic frame UL BB-Frame comprising a header field UL BBHeader, dedicated to the uplink UL, and a data field UL DATAFIELD to be sent over the uplink UL, then in coding and in modulating the data of each basic frame UL BB-Frame to construct frames UL PL-Frames (14) and in sending the UL PL-Frames (14) on the uplink UL, **characterized in that** the method further comprises:
- a first additional preprocessing step (26) consisting, in the gateway station (20), in pre-segmenting the data as a function of the carrier frequency which is dedicated to them on the downlink DL and in encapsulating the pre-segmented data in successive basic frames DL BB-Frames (15, 63, 64), that can be transmitted over the downlink, the encapsulation of each basic frame DL BB-Frame (15, 63, 64) of the downlink consisting in adding a transport header DL BB-TH dedicated to the downlink,
- and a second additional step (27) consisting, in the gateway station (20), in incorporating the different basic frames DL BB-Frames (15, 63, 64) of the downlink, associated with their respective transport headers DL BB-TH, in the data field of the different basic frames UL BB-Frames (12, 61, 62, 71, 72, 73, 74) of the uplink.

2. Transmission method according to Claim 1, **characterized in that** the transport header DL BB-TH of each frame DL BB-Frame (15, 63, 64) of the downlink comprises instructions intended for an OBP processor (52) mounted on board the satellite (30), the instructions comprising at least one identification parameter DL Id of a modulator/coder (53) to be used on the downlink, an identifier of the carrier frequency to be used, a start parameter and an end parameter indicating the start and the end of the corresponding frame DL BB-Frame (15, 63, 64), and a length parameter of the corresponding frame DL BB-Frame (15, 63, 64).

3. Transmission method according to Claim 2, **characterized in that** when a frame DL BB-Frame (15, 63, 64) has a length greater than the length of the data field available in the UL BB-Frame (12, 61, 62, 71, 72, 73, 74) of the uplink, the first additional preprocessing step (26) further consists in fragmenting the corresponding frame DL BB-Frame (15, 63, 64) into several fragments (DL BB2a, DL BB2b), then in encapsulating each fragment with a corresponding transport header DL BB-TH, and, the second additional step (27) consists in incorporating the different fragments of the fragmented frame DL BB-Frame (15, 63, 64) in different consecutive frames UL BB-Frames (61, 62, 71, 72, 73, 74) of the uplink.

4. Transmission method according to Claim 3, **characterized in that** it further consists, on board the satellite (30), in receiving (31) the UL PL-Frames (14), in demodulating and decoding (32) the data of the frames UL PL-Frames received to extract from them the UL BB-Frames then, from each UL BB-Frame, in extracting the fragments of DL BB-Frames (15, 63, 64) and in reassembling the fragments to reconstruct the complete DL BB-Frames, in routing each DL BB-Frame to the modulator/coder corresponding to the identifier DL Id indicated in the specific header DL BB-TH of said DL BB-Frame, then in transmitting the modulated and coded frames over the downlink DL.
